# EUROPÄISCHE PATENTSCHRIFT

(11) **EP 1 463 653 B1**
(45) Veröffentlichungstag und Bekanntmachung des Hinweises auf die Patenterteilung: **28.12.2005**
(21) Anmeldenummer: 03702512.9
(22) Anmeldetag: 23.01.2003
(51) Int. Cl.: B60R 13/04, B60R 13/10

(54) **SCHILD**
PLATE
PLAQUE

(30) Priorität: 02.12.2002 DE 20218626 U
(43) Veröffentlichungstag der Anmeldung: 06.10.2004
(73) Patentinhaber: FER Fahrzeugelektrik GmbH, 99819 Eisenach (DE)
(72) Erfinder: TIETZE, Martin, 99817 Eisenach (DE); GOTTHARDT, Frank, 99817 Eisenach (DE); QUENDT, Peer, 99817 Eisenach (DE)
(74) Vertreter: Strasser, Wolfgang
(86) Internationale Anmeldenummer: PCT/EP2003/000680
(87) Internationale Veröffentlichungsnummer: WO 2004/050431

(56) Entgegenhaltungen:
- WO-A-98/57525
- DE-C- 3 902 729
- DE-U- 20 022 563
- DE-U- 20 201 224
- PATENT ABSTRACTS OF JAPAN vol. 017, no. 573 (P-1630), 19. Oktober 1993 (1993-10-19) & JP 05 165416 A (TOSHIBA CORP;OTHERS: 01), 2. Juli 1993 (1993-07-02)

## Beschreibung

Die Erfindung betrifft ein Schild, insbesondere ein Kraftfahrzeug-Kennzeichenschild der im Oberbegriff von Anspruch 1 genannten Art.

Ein unter diesen Oberbegriff fallendes Kraftfahrzeug-Kennzeichenschild ist aus dem deutschen Gebrauchsmuster 297 12 954.6 bekannt. Bei dieser bekannten Anordnung ist der Symbolträger eine steife Kunststoffplatte, die in einem als Halterahmen ausgebildeten Gehäuse vor einer elektrisch aktivierbaren Leuchtfolie angeordnet ist, die von einer Elektrolumineszenzfolie gebildet wird. Die vom Halterahmen umschlossene Lichtdurchtrittsöffnung, durch welche das von der Leuchtfolie im eingeschalteten Zustand abgegebene Licht nach außen tritt, nachdem es den Symbolträger von hinten her durchleuchtet hat, ist nicht weiter verschlossen, da der Symbolträger wegen seiner Steifigkeit von dem Halterahmen ohne weiteres sicher gehalten werden kann und dadurch auch die hinter ihm liegende elektrisch aktivierbare Leuchtfolie fixiert.

Diese bekannte Anordnung ist insofern vorteilhaft, als durch die integrierte, elektrisch aktivierbare Leuchtfolie eine direkte Hinterleuchtung der Kennzeichnung erzielt wird, ohne daß eine getrennt angeordnete Beleuchtung erforderlich ist. Somit ist das bekannte Kennzeichenschild äußerst kompakt und platzsparend.

Nachteilig ist, daß keine steifen, d.h. als Verschluß der Lichtdurchtrittsöffnung geeigneten Kunststoffplatten zur Verfügung stehen, die ,sowohl für das von der elektrisch aktivierbaren Leuchtfolie abgegebene, von hinten kommende Licht transparent als auch für von außen kommendes, auf den Symbolträger auffallendes Fremdlicht reflektierend sind, wie dies vom Gesetzgeber insbesondere für Kraftfahrzeug-Kennzeichenschilder verlangt wird, aber auch für andere Schilder, beispielsweise Verkehrsschilder von Vorteil bzw. oder erforderlich ist.

Somit liegt der Erfindung die Aufgabe zugrunde, ein Schild der eingangs genannten Art so weiterzubilden, daß es zusätzlich zu der mit Hilfe einer elektrisch aktivierbaren Leuchtfolie erfolgenden Eigenbeleuchtung auch reflektierende Eigenschaften aufweist.

Zur Lösung dieser Aufgabe sieht die Erfindung die im Anspruch 1 zusammengefaßten Merkmale vor.

Ausgangspunkt dieser Lösung ist die Tatsache, daß auf dem Markt Kunststoffolien zur Verfügung stehen, die für von hinten auftreffendes Licht, weitgehend transparent sind, während sie auf ihre Vorderseite auffallendes Licht reflektieren. Hierzu gehören insbesondere retroreflektierende Folien, die auf ihrer Vorderseite glatt sind und von ihrer Rückseite abstehende mikroprismatische Strukturen aufweisen, an deren Grenzflächen von vorne einfallendes Licht durch Totalreflexion zurückgeworfen wird. Es sind aber auch Folien erhältlich, bei denen die reflektierenden Strukturen vollständig eingebettet sind. Im vorliegenden Zusammenhang ist unabhängig vom konkreten Aufbau und der eigentlichen physikalischen Wirkungsweise lediglich von Bedeutüng, daß die zur Verwendung kommende Folie, die im folgenden kurz als "Reflexfolie" bezeichnet wird, für von hinten kommendes Licht eine hohe Transparenz besitzt und von vorn auftreffendes Licht in starkem Maße reflektiert.

Da solche Reflexfolien jedoch keine Eigensteifigkeit besitzen, können sie nicht in der Weise, wie dies aus dem oben diskutierten deutschen Gebrauchsmuster 297 12 954.6 bekannt ist, als "Verschluß-Platte" der Lichtaustrittsöffnung des Schildgehäuses dienen.

Um die elektrisch aktivierbare Leuchtfolie und die vor. ihr angeordnete Reflexfolie im Gehäuse zu stabilisieren, ist es daher erforderlich, die Lichtdurchtrittsöffnung durch eine Lichtscheibe zu verschließen, die in beiden Richtungen transparent ist und primär eine mechanische Haltefunktion erfüllt.

Ohne weitere Maßnahmen würde sich dabei aber das Problem ergeben, daß sich die Reflexfolie an die Innenseite der Lichtscheibe über den gesamten Flächenbereich ungleichmäßig dicht anlegen und teilweise sogar ansaugen würde, so daß auch bei gleichmäßiger Beleuchtung von innen oder außen unterschiedlich helle bzw. dunkle Zonen bzw. Newton-Ringbildungen entstehen würden. Dies ist nicht nur unschön sondern insbesondere -bei Kraftfahrzeug-Kennzeichenschildern auch unzulässig. Zur Behebung dieser Schwierigkeiten ist gemäß der Erfindung zwischen der. Innen- oder Rückseite der Lichtscheibe und der ihr zugewandten Vorderfläche der Reflexfolie eine flächige Klebeverbindung vorgesehen.

Diese flächige Klebeverbindung kann auf unterschiedliche Weise realisiert werden.

Bei einer besonders bevorzugten Ausführungsform wird die Vorderseite der Reflexfolie unmittelbar mit der Rückseite der Lichtscheibe flächig verklebt. Dabei kann der Kleber, insbesondere durch ein Transferverfahren, zunächst auf die Vorderseite der Reflexfolie aufgebracht und diese dann an die Rückseite der Lichtscheibe angedrückt werden. Alternativ wird der Kleber zunächst auf die Rückseite der Lichtscheibe aufgetragen und dann die Reflexfolie gegen diese Kleberschicht angedrückt. In diesem Fall kann die Reflexfolie entweder selbst keinen Kleber aufweisen oder ebenfalls eine Kleberschicht tragen, die sich mit der der Lichtscheibe ergänzt. Im letztgenannten Fall können die beiden einander ergänzenden Schichten aus Materialien bestehen, die jeweils für sich allein genommen keine oder nur geringe Klebeeigenschaften besitzen und eine starke Klebewirkung erst gemeinsam entwickeln, wenn sie miteinander in Berührung und/oder zur chemischen Reaktion gebracht werden.

Wesentlich ist, daß die Verbindung über die gesamte von vorne her sichtbare Fläche gleichmäßig erfolgt, sodaß sich bei der späteren aktiven (durch die Leuchtfolie erfolgenden) und passiven (durch das von vorn einfallende und danach reflektierte Licht erfolgenden) Durchstrahlung keine sichtbaren Helligkeitsunterschiede ergeben.

Gemäß einer anderen vorteilhaften Variante wird die Klebeverbindung zwischen der Reflexfolie und der Lichtscheibe durch eine weitere, mit Klebstoff beschichtete Folie vermittelt, die in beiden Richtungen eine sehr hohe Transparenz besitzt und eine so enge und gleichmäßige Verbindung der Reflexfolie mit der Lichtscheibe bewirkt, daß die oben erwähnten optischen Störungen verhindert werden.

Ein besonderer Vorteil des erfindungsgemäßen Schildes ist darin zu sehen, daß ein gesonderter Symbolträger nicht mehr zwingend erforderlich ist. Vielmehr können die auf dem Schild darzustellenden Symbole auf jeder der vom Betrachter her gesehen vor der hinteren Oberfläche der Reflexfolie liegenden Oberflächen, d.h. auf der Vorderseite der Reflexfolie, der Rück- bzw. Vorderseite der auf beiden Seiten mit Klebstoff beschichteten Folie (falls eine solche vorhanden ist) oder der Rück- bzw. Vorderseite der Lichtscheibe angebracht werden. Dabei ist es nicht erforderlich, daß sich alle darzustellenden Symbole auf der gleichen Oberfläche befinden.

Besonders bevorzugt ist es, diese Symbole auf einer oder mehreren der Folienoberflächen anzubringen, da diese sehr einfach bedruckt werden können.

Vorteilhaft ist ebenfalls, daß die elektrisch aktivierbare Folie zwischen der Gehäuserückwand und der oder den vor ihr befindlichen, fest mit der Lichtscheibe verbundenen Folie(n) lose eingelegt ist und gehalten wird, so daß keine zusätzlichen Befestigungsmittel erforderlich sind.

Bei der elektrisch aktivierbaren Leuchtfolie kann es sich um eine Elektrolumineszenzfolie handeln, die in bekannter Weise mit einer Wechselspannung angesteuert wird, die bei einem Kraftfahrzeugkennzeichenschild mit Hilfe eine Vorschaltgerätes aus der Bord-Gleichspannung erzeugt werden lkann.

Besonders bevorzugt ist jedoch, als elektrisch aktivierbare Leuchtfolie eine Folie mit organischen Leuchtdioden, eine sog. OLED-Folie zu verwenden, die den Vorteil bietet, daß sie mit einer durch eine äußerst einfache Zusatzschaltung aus einer Bord-Gleichspannung ableitbaren Gleichspannung betrieben werden kann. Die für Elektrolumineszenzfolien erforderliche Ansteuerelektronik entfällt ebenso wie besondere Isolationsmaßnahmen. Ein weiterer Vorteil von OLED-Folien ist die wesentlich höhere erreichbare Leuchtdichte.

Die oben erwähnten sowie weitere Vorteile und Eigenschaften eines erfindungsgemäßen Schildes sind in den Unteransprüchen niedergelegt.

Die Erfindung wird im folgenden anhand eines Ausführungsbeispiels unter Bezugnahme auf die Zeichnung beschrieben; in dieser zeigen:
- Fig. 1: eine Vorderansicht eines erfindungsgemäßen Schildes, das als Kraftfahrzeug-Kennzeichenschild ausgebildet ist,
- Fig. 2: in stark schematisierter Form einen Schnitt durch eine erste Ausführungsform des Schildes aus Fig. 1 längs der Linie II-II, bei der die Reflexfolie direkt mit der Lichtscheibe verklebt ist, und
- Fig. 3: eine der Fig. 2 entsprechende Darstellung einer zweiten Ausführungsform eine erfindungsgemäßen Schildes, bei der die Reflexfolie mit Hilfe einer beidseitig mit Klebstoff beschichteten Folie mit der Lichtscheibe verklebt ist

Bei den in den Figuren gezeigten Ausführungsbeispielen ist das als Kennzeichenschild eines Kraftfahrzeugs ausgebildete erfindungsgemäße Schild 1 mit bekannten, nicht dargestellten Mitteln am Karosserieblech 2 eines Kraftfahrzeuges befestigt.

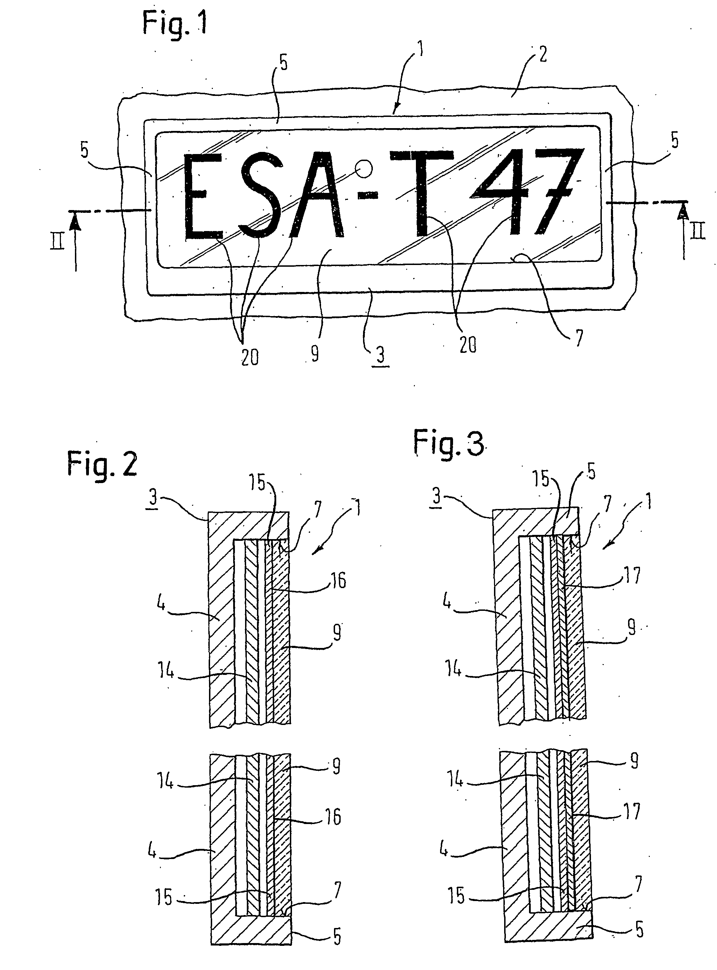

Wie man insbesondere den Fig. 2 und 3 entnehmen kann, besitzt das Schild 1 ein Gehäuse 3 mit einer Rückwand 4, die einen um den gesamten Umfang der Rückwand umlaufenden, sich nach vorne, d.h. zum Betrachter hin (in Fig. 2 und 3 nach rechts) erstreckenden Rand 5 trägt, der mit der Rückwand 4 einstückig verbunden sein kann.

Der nach vorne vorstehende Rand 5 umschließt eine Lichtdurchlaßöffnung 7, die durch eine transparente Lichtscheibe 9 verschlossen ist. Die Lichtscheibe 9 kann auf irgendeine geeignete Weise am umlaufenden Rand 5 des Gehäuses 3 befestigt sein.

Vor der Rückwand 4 des Gehäuses 3 befindet sich eine in etwa die gleiche Fläche wie die Rückwand 4 besitzende, elektrisch aktivierbare Leuchtolie 14, die mit ihren Flachseiten an der Rückwand 4 sowie an der mit der Lichtscheibe 9 durch Klebung verbundenen Reflexfolie 15 anliegt. Die in den Fig. 2 und 3 wiedergegebenen Abstände zwischen der Leuchtfolie 14 und der Rückwand 4 bzw. der Reflexfolie 15 dienen lediglich der Veranschaulichung und sind in Wirklichkeit verschwindend klein.

Die in den Fig. 2 und 3 ganz links angeordnete, elektrisch aktivierbare Leuchtfolie 14 ist in nicht dargestellter Weise an eine elektrische Energiequelle so angeschlossen, daß mit Hilfe eines Schalters elektrische Spannung an sie angelegt werden kann. Sie wird entweder von einer Elektrolumineszenzfolie oder von einer OLED-Folie gebildet. Im aktivierten Zustand leuchtet die gesamte Folie 14 gleichmäßig und das von ihr ausgehende Licht durchdringt die in den Fig. 2 und 3 rechts von ihr angeordneten Schichten und insbesondere die Lichtscheibe 9, so daß in Blickrichtung der Fig. 1 die gesamte Lichtdurchtrittsöffnung 7 von hinten her hell erleuchtet erscheint.

Rechts neben der elektrisch aktivierbaren Leuchtfolie 14 ist die Reflexfolie 15 so angeordnet, daß sie von rechts, d.h. von außen durch die Lichtscheibe 9 hindurch auf sie auffallendes Fremdlicht so reflektiert, daß es seinen Weg umkehrt und durch die Lichtscheibe 9 in etwa in der gleichen Richtung austritt, in der es eingetreten ist. Zusätzlich ist die Reflexfolie 15 für von hinten, d.h. in den Fig. 2 und 3 von links kommendes Licht zumindest teilweise transparent, so daß ein erheblicher Teil des von der elektrisch aktivierbaren Leuchtfolie 14 in Richtung der Lichtdurchtrittsöffnung 7 ausgesandten Lichts durch sie hindurchtreten kann.

Bei dem in Fig. 2 gezeigten Ausführungsbeispiel ist die Reflexfolie 15 mit der Rückseite der Lichtscheibe 9 unmittelbar durch eine flächige Verklebung 16 verbunden. Zu deren Herstellung ist es besonders bevorzugt, ein Transferverfahren zu verwenden, bei dem eine Schicht eines Transferklebstoffs zunächst auf ein Trägerpapier aufgebracht und dann auf die glatte, d.h. nicht mikroprismatische Vorderseite der Reflexfolie 15 auflaminiert wird. Dann wird der aus Reflexfolie, Kleber und Trägerpapier bestehende Schichtenverbund auf die erforderliche Größe zugeschnitten, das Trägerpapier abgezogen und die Reflexfolie 15 mit der auf ihr verbliebenen Kleberschicht voraus von hinten her gegen die Rückseite der Lichtscheibe 9 beispielsweise mit Hilfe einer Gummiwalze gleichmäßig so angedrückt, daß die Luft zwischen den Schichten verdrängt wird. Hierdurch entsteht eine flächig gleichmäßige Klebeverbindung, bei der keinerlei unterschiedlich helle bzw. dunkle Zonen oder. Newton-Ringbildungen auftreten.

Diese Vorgehensweise ist besonders vorteilhaft, wenn die Lichtscheibe 9, anders als in den Fig. und 3 dargestellt, mit dem einen Rahmen bildenden Rand 5 einstückig verbunden und dieser an der Rückwand 4 des Gehäuses 3 in lösbarer Weise befestigt ist.

Bei der in Fig. 3 gezeigten Ausführungsform ist wischen der Reflexfolie 15 und der Innenseite der Lichtscheibe 9 ist eine weitere Folie 17 angeordnet, die auf ihren beiden Flachseiten eine Klebstoffbeschichtung trägt. Diese Folie 17 ist in sehr hohem Maße transparent, sodaß sowohl das von innen kommende Licht der elektrisch aktivierbaren Leuchtfolie 14 als auch das von außen kommende Fremdlicht, sowohl vor als auch nach seiner Reflexion an der Reflexfolie 15 ohne erheblichen Intensitätsverlust durch sie hindurchtreten kann.

Diese beidseitig mit Kleber beschichtete Folie 16 kann zunächst mit ihrer einen Klebeseite mit der Reflexfolie laminiert werden, wobei ihre andere Flachseite mit einem Schutzpapier abgedeckt ist. Nach dem oben bereits erwähnten Zuschneiden wird dann das Schutzpapier abgezogen und der aus Reflexfolie 15 und Klebefolie 17 bestehende Verbund mit der Rückseite der Lichtscheibe 9 in der oben beschriebenen Weise verklebt, wodurch wieder die bereits erläuterten Vorteile erzielt werden.

Insbesondere wird das Auftreten von abgegrenzten dunklen Flecken und/oder von Newton-Ringen vermieden, die ohne Verklebung beim Betrachten des Schildes von außen her deutlich sichtbar wären und das Erscheinungsbild des Schildes nachteilig beeinflussen bzw. seine Verwendbarkeit verhindern würden.

Die für den Betrachter sichtbaren, in Fig. 1 gezeigten, auf dem Schild dargestellten Symbole 20 können sich auf der Vorder- und/oder Rückseite eines Symbolträgers befinden und unterscheiden sich hinsichtlich ihrer Transparenz von den übrigen Flächenbereichen des Symbolträgers. Im vorliegenden Fall sind sie praktisch lichtundurchlässig ausgebildet, so daß sie im Vergleich zu den nahezu vollständig lichtdurchlässigen übrigen Bereichen des Symbolträgers schwarz erscheinen.

Bei dem eben erwähnten Symbolträger handelt es sich nicht notwendigerweise um ein zusätzliches Bauteil. Vielmehr können die darzustellenden Symbole auf die Vorderseite der Reflexfolie 15 und/oder gegebenenfalls auf die Vorder- oder Rückseite der Klebefolie 17 aufgedruckt sein. Ebenso ist es möglich, die Symbole 20 auf der Innen- und/oder Außenfläche der Lichtscheibe 9 vorzusehen. Dort können sie auch als erhabene, d.h. über die betreffende Flachseite vorstehende Strukturen ausgebildet werden.

In Abweichung hiervon ist es allerdings auch möglich, einen in den Fig. 2 und 3 nicht gezeigten zusätzlichen Symbolträger, der als flache Scheibe oder Folie ausgebildet ist, vor der Reflexfolie 15 anzuordnen.

Je nach Verwendungszweck des erfindungsgemäßen Schildes kann der Symbolträger auch mehr als zwei Transparenzstufen aufweisen. Auch können eine oder mehrere der Folien bzw. die Außen- bzw. Innenfläche der Lichtscheibe 9 in unterschiedlichen Bereichen unterschiedlich gefärbt sein, so daß sich hier weitere Gestaltungsmöglichkeiten ergeben, die insbesondere auch eine Verwendung eines erfindungsgemäßen Schildes als Verkehrsschild zulassen.

## Patentansprüche

1. Schild (1), insbesondere Kraftfahrzeug-Kennzeichenschild, mit einem Gehäuse (3), das eine Rückwand (4) und einen diese Rückwand (4) umgebenden, nach vorne vorstehenden Rand (5) umfaßt, der eine Lichtdurchtrittsöffnung (7) umschließt, durch die hindurch ein flacher sich parallel zur Rückwand (4) des Gehäuses erstreckender Symbolträger sichtbar ist, der zur Darstellung der auf ihm befindlichen Symbole (20) Bereiche unterschiedlicher Transparenz aufweist, wobei zur Beleuchtung zwischen der Rückwand (4) und dem Symbolträger eine elektrisch aktivierbare Leuchtfolie (14) vorgesehen ist, die zumindest die Bereiche hoher Transparenz des Symbolträgers von hinten her durchleuchtet, **dadurch gekennzeichnet, daß** vor der elektrisch aktivierbaren Leuchtfolie (14) und parallel zu dieser eine Reflexfolie (15) angeordnet ist, die sich zumindest über erhebliche Teile der Fläche der Lichtaustrittsöffnung (7) erstreckt, für das von hinten kommende Licht der elektrisch aktivierbaren Leuchtfolie (14) zumindest bereichsweise transparent ist und von außen durch die Lichtaustrittsöffnung (7) hindurchtretendes und auf sie auffallendes Fremdlicht reflektiert,
daß eine die Lichtaustrittsöffnung (7) verschließende, zumindest bereichsweise transparente Lichtscheibe (9) vorgesehen ist und
daß zwischen der Innenseite der Lichtscheibe (9) und der ihr zugewandten Oberfläche der Reflexfolie (15) eine flächige Klebeverbindung vorgesehen ist.

2. Schild nach Anspruch 1, **dadurch gekennzeichnet, daß** die flächige Klebeverbindung eine unmittelbare flächige Verklebung (16) der Vorderseite der Reflexfolie (15) mit der Innenseite der Lichtscheibe (9) umfaßt.

3. Schild nach Anspruch 1, **dadurch gekennzeichnet, daß** die flächige Klebeverbindung eine zwischen der Reflexfolie (15) und der Lichtscheibe (9) angeordnete, beidseitig mit Klebstoff beschichtete zumindest bereichsweise transparente Folie (17) umfaßt, die einerseits mit der Reflexfolie (15) und andererseits mit der Innenseite der Lichtscheibe (9) flächig verklebt ist.

4. Schild nach einem der vorhergehenden Ansprüche, **dadurch gekennzeichnet, daß** die Lichtscheibe als Symbolträger dient.

5. Schild nach einem der Anspruch 3 oder 4, **dadurch gekennzeichnet, daß** die mit Klebstoff beschichtete Folie (17) als Symbolträger dient.

6. Schild nach einem der Ansprüche 1 bis 5, **dadurch gekennzeichnet, daß** die Reflexfolie (15) als Symbolträger dient.

7. Schild nach einem der Ansprüche 1 bis 6, **dadurch gekennzeichnet, daß** ein eigenständiger Symbolträger vorgesehen ist.

8. Schild nach Anspruch 7, **dadurch gekennzeichnet, daß** der Symbolträger als eigensteife Platte ausgebildet ist.

9. Schild nach Anspruch 7, **dadurch gekennzeichnet, daß** der Symbolträger eine flexible Folie ist.

10. Schild nach einem der vorhergehenden Ansprüche, **dadurch gekennzeichnet, daß** die elektrisch aktivierbare Folie (14) zwischen die Rückwand (4) des Gehäuses (3) und die Reflexfolie (15) lose anliegend eingelegt ist.

11. Schild nach einem der Ansprüche 1 bis 9, **dadurch gekennzeichnet, daß** die elektrisch aktivierbare Folie (14) mit der Rückseite der Reflexfolie (15) unmittelbar verklebt ist.

12. Schild nach einem der Ansprüche 1 bis 9, **dadurch gekennzeichnet, daß** die elektrisch aktivierbare Folie (14) mit der Rückseite der Reflexfolie (15) unter Zwischenfügung weiterer transparenter Schichten verklebt ist.

13. Schild nach einem der Ansprüche 1 bis 9, **dadurch gekennzeichnet, daß** die elektrisch aktivierbare Folie (14) mit der Rückwand (4) des Gehäuses (3) verklebt ist.

14. Schild nach einem der vorhergehenden Ansprüche, **dadurch gekennzeichnet, daß** die elektrisch aktivierbare Leuchtfolie (14) eine Elektrolumineszenzfolie ist.

15. Schild nach einem der vorhergehenden Ansprüche, **dadurch gekennzeichnet, daß** die elektrisch aktivierbare Leuchtfolie (14) eine Leuchtfolie mit organischen Leuchtdioden (OLED-Folie) ist.

## Claims

1. A plate (1), in particular a motor vehicle licence plate, comprising a casing (3) including a rear wall (4) and a forwardly projecting edge portion (5) which surrounds that rear wall (4) and extends around a light transmission opening (7) through which a flat symbol carrier extending in parallel relationship with the rear wall (4) of the casing is visible, which symbol carrier has regions of differing transparency for representation of the symbols (20) thereon, wherein provided for illumination between the rear wall (4) and the symbol carrier is an electrically activatable light film (14) which transilluminates at least the regions of high transparency of the symbol carrier from the rear,
**characterised in**
**that** arranged in front of the electrically activatable light film (14) and in parallel relationship therewith is a reflection film (15) which extends at least over considerable portions of the area of the light exit opening (7) and is, at least region-wise, transparent for the light coming from the rear from the electrically activatable light film (14) and which reflects extraneous light which passes from the exterior through the light exit opening (7) and impinges on the reflection film,
**that** there is provided an at least region-wise transparent light cover (9) closing the light exit opening (7), and
**that** an areal adhesive connection is provided between the inside of the light cover (9) and the surface of the reflection film (15) facing said inside of the light cover.

2. A plate according to claim 1 **characterised in that** the areal adhesive connection includes a direct areal adhesive join (16) of the front side of the reflection film (15) to the inside of the light cover (9).

3. A plate according to claim 1 **characterised in that** the areal adhesive connection includes an at least region-wise transparent film (17) which is arranged between the reflection film (15) and the light cover (9) and which is coated on both sides with adhesive and which is glued in areal relationship on the one hand to the reflection film (15) and on the other hand to the inside of the light cover (9).

4. A plate according to one of the preceding claims **characterised in that** the light cover serves as a symbol carrier.

5. A plate according to one of claims 3 and 4 **characterised in that** the film (17) coated with adhesive serves as the symbol carrier.

6. A plate according to one of claims 1 to 5 **characterised in that** the reflection film (15) serves as the symbol carrier.

7. A plate according to one of claims 1 to 6 **characterised in that** there is provided an independent symbol carrier.

8. A plate according to claim 7 **characterised in that** the symbol carrier is in the form of an inherently stiff plate member.

9. A plate according to claim 7 **characterised in that** the symbol carrier is a flexible film.

10. A plate according to one of the preceding claims **characterised in that** the electrically activatable film (14) is inserted between the rear wall (4) of the casing (3) and the reflection film (15) in a condition of bearing loosely there against.

11. A plate according to one of claims 1 to 9 **characterised in that** the electrically activatable film (14) is glued directly to the rear side of the reflection film (15).

12. A plate according to one of claims 1 to 9 **characterised in that** the electrically activatable film (14) is glued to the rear side of the reflection film (15) with the interposition of further transparent layers.

13. A plate according to one of claims 1 to 9 **characterised in that** the electrically activatable film (14) is glued to the rear wall (4) of the casing (3).

14. A plate according to one of the preceding claims **characterised in that** the electrically activatable light film (14) is an electroluminescence film.

15. A plate according to one of the preceding claims **characterised in that** the electrically activatable light film (14) is a light film with organic light emitting diodes (OLED film).

## Revendications

1. Plaque (1), en particulier plaque minéralogique pour véhicule automobile, comportant un boîtier (3) qui comporte une paroi arrière (4) et un bord (5) en saillie vers l'avant, qui entoure ladite paroi arrière (4) et délimite une ouverture de passage de lumière (7), à travers laquelle est visible un support de symboles plat, qui est parallèle à la paroi arrière (4) du boîtier et qui, pour la représentation des symboles (20) posés sur ledit support, comporte des zones de transparence différente, une feuille lumineuse (14), apte à être activée électriquement, étant prévue pour l'éclairage entre la paroi arrière (4) et le support de symboles et transmettant la lumière pour illuminer de l'arrière au moins les zones de haute transparence du support de symboles, **caractérisée en ce qu'**une feuille réfléchissante (15) est agencée devant la feuille lumineuse (14) apte à être activée électriquement et parallèlement à celle-ci, laquelle feuille réfléchissante (15) s'étend au moins sur de grandes parties de la surface de l'ouverture de sortie de la lumière (7), est au moins transparente par zones pour la lumière projetée de l'arrière par la feuille lumineuse (14) apte à être activée électriquement et réfléchit la lumière externe passant de l'extérieur à travers l'ouverture de passage de lumière (7) et projetée sur elle, **en ce qu'**il est prévu une vitre d'éclairage (9) au moins transparente par zones et fermant l'ouverture de passage de lumière (7), et **en ce qu'**il est prévu un assemblage collé plat entre la face intérieure de la vitre d'éclairage (9) et la surface de la feuille réfléchissante (15) orientée vers celle-ci.

2. Plaque selon la revendication 1, **caractérisée en ce que** l'assemblage collé plat est constitué par un collage (16) plat direct de la face avant de la feuille réfléchissante (15) avec la face intérieure de la vitre d'éclairage (9).

3. Plaque selon la revendication 1, **caractérisée en ce que** l'assemblage collé plat est formé par une feuille (17) transparente au moins par zones, qui est revêtue de colle sur les deux faces et est agencée entre la feuille réfléchissante (15) et la vitre d'éclairage (9) et qui est collée à plat, sur une face, avec la feuille réfléchissante (15) et, sur l'autre face, avec la vitre d'éclairage (9).

4. Plaque selon l'une quelconque des revendications précédentes, **caractérisée en ce que** la vitre d'éclairage (9) fait fonction de support de symboles.

5. Plaque selon la revendication 3 ou 4, **caractérisée en ce que** la feuille adhésive (17) fait fonction de support de symboles.

6. Plaque selon l'une quelconque des revendications 1 à 5, **caractérisée en ce que** la feuille réfléchissante (15) fait fonction de support de symboles.

7. Plaque selon l'une quelconque des revendications 1 à 6, **caractérisée en ce qu'**il est prévu un support de symboles indépendant.

8. Plaque selon la revendication 7, **caractérisée en ce que** le support de symboles est conçu sous forme de plaque rigide par elle-même.

9. Plaque selon la revendication 7, **caractérisée en ce que** le support de symboles est une feuille flexible.

10. Plaque selon l'une quelconque des revendications précédentes, **caractérisée en ce que** la feuille (14), apte à être activée électriquement, est insérée de manière lâche entre la paroi arrière (4) du boîtier (3) et la feuille réfléchissante (15).

11. Plaque selon l'une quelconque des revendications 1 à 9, **caractérisée en ce que** la feuille (14), apte à être activée électriquement, est collée directement avec la face arrière de la feuille réfléchissante (15).

12. Plaque selon l'une quelconque des revendications 1 à 9, **caractérisée en ce que** la feuille (14), apte à être activée électriquement, est collée avec la face arrière de la feuille réfléchissante (15) en intercalant d'autres couches transparentes.

13. Plaque selon l'une quelconque des revendications 1 à 9, **caractérisée en ce que** la feuille (14), apte à être activée électriquement, est collée à la paroi arrière (4) du boîtier (3).

14. Plaque selon l'une quelconque des revendications précédentes, **caractérisée en ce que** la feuille lumineuse (14), apte à être activée électriquement, est une feuille électroluminescente.

15. Plaque selon l'une quelconque des revendications précédentes, **caractérisée en ce que** la feuille lumineuse (14), apte à être activée électriquement, est une feuille lumineuse avec des diodes électroluminescentes organiques (feuille OLED).
